(19) **Europäisches Patentamt**
**European Patent Office**
**Office européen des brevets**

(11) **EP 3 214 404 B1**

(12) **EUROPEAN PATENT SPECIFICATION**

(45) Date of publication and mention
of the grant of the patent:
**02.12.2020 Bulletin 2020/49**

(51) Int Cl.:
***G01C 17/38*** *(2006.01)* ***G01C 25/00*** *(2006.01)*

(21) Application number: **17159198.5**

(22) Date of filing: **03.03.2017**

(54) **SYSTEMS AND METHODS FOR CALIBRATING AND ADJUSTING A HEADING REFERENCE SYSTEM**

SYSTEME UND VERFAHREN ZUM KALIBRIEREN UND JUSTIEREN EINES STEUERKURSREFERENZSYSTEMS

SYSTÈMES ET PROCÉDÉS D'ÉTALONNAGE ET DE RÉGLAGE D'UN SYSTÈME DE RÉFÉRENCE DE CAP

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2016 US 201615060358**
**28.09.2016 US 201615278743**

(43) Date of publication of application:
**06.09.2017 Bulletin 2017/36**

(73) Proprietor: **INNOVATIVE SOLUTIONS & SUPPORT, INC.**
**Exton, PA 19341 (US)**

(72) Inventor: **ASKARPOUR, Shahram**
**Media, PA 19063 (US)**

(74) Representative: **Mewburn Ellis LLP**
**Aurora Building**
**Counterslip**
**Bristol BS1 6BX (GB)**

(56) References cited:
**US-A1- 2004 123 474      US-A1- 2015 019 159**
**US-B2- 9 157 747**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to systems and methods for calibrating and adjusting for deviations in heading reference systems on vehicles, such as attitude heading reference systems on aircraft or heading systems on ships, in which the one or more magnetometers in such systems are calibrated using actual and theoretical readings at various magnetic headings of the vehicle and are recalibrated or adjusted for deviations relating to hard iron disturbances and manufacturing defects at known magnetic headings of the vehicles.

Typically, vehicles having a heading system, such as an aircraft having an attitude and heading reference system (AHRS), must be periodically calibrated to ensure a minimization of measurement errors. The measurement errors may be due to factors such as hard iron disturbances and/or installation misalignment associated with magnetometers or other components of the heading system. Most prior art calibration methods require numerous repositioning of the vehicles for as many as eight or more different positions to come up with an approximate calibration number. The approximate calibration number is then periodically recalculated during flight of the aircraft to minimize estimation errors. None of the prior art methods known to applicant utilize theoretical magnetic field properties of the Earth, such as theoretical values for horizontal and vertical intensity of the magnetic field at the location of the positioned vehicle, such as the aircraft on the tarmac, for comparison with actual magnetometer readings at such a position. These prior art calibration methods are time-consuming and increase the complexity of the calibration procedure and, potentially, affect the accuracy of the calibrations. Examples of such prior art methods are disclosed in United States Patent Nos. 7,587,277; 8,061,049; 7,891,103; 7,146,740; and 6,860,023, none of which use the theoretical magnetic components of the Earth's magnetic field, such as obtained from a web site, to calibrate the AHRS heading.

U.S. Patent No. 9,157,747 describes systems and methods of initially calibrating heading reference systems on vehicles, such as attitude heading reference systems on aircraft or heading systems on ships, in which the magnetometer in such systems is calibrated using actual and theoretical readings at various magnetic headings of the vehicle.

US2015/019159 discloses a system that comprises an inertial measurement unit comprising one or more gyroscopes configured to measure angular velocity about a respective one of three independent axes and one or more accelerometers configured to measure specific force along a respective one of the three independent axes; a magnetometer configured to measure strength of a local magnetic field along each of the three independent axes; and a processing device coupled to the inertial measurement unit and the magnetometer; the processing device configured to compute kinematic state data for the system based on measurements received from the magnetometer and the inertial measurement unit. The processing device is further configured to calculate magnetometer measurement calibration parameters using a first technique when position data is unavailable and to calculate magnetometer measurement calibration parameters using a second technique when position data is available.

In view of the foregoing, there is a need for simplified systems and methods that can quickly and accurately calibrate and adjust a vehicle's heading system in a manner that accounts for errors resulting from hard iron disturbances, misalignment of vehicles' components, and other factors that negatively impact the heading system.

According to the present invention there is provided a method for recalibrating an aircraft attitude and reference heading system according to claim 1.

The method may optionally be as specified in claim 2 or claim 3.

In the drawings:

FIG. 1 is a flow diagram illustrating a process for initially calibrating a heading reference system in accordance with some embodiments of the present invention.

FIG. 2 is a flow diagram illustrating a process for re-calibrating a heading reference system in accordance with some embodiments of the present invention.

FIG. 3 is a flow diagram illustrating a process for determining magnetometer misalignment and calibrating a heading reference system in accordance with some embodiments of the present invention.

FIG. 4 is a flow diagram illustrating a process of adjusting for deviations in a heading reference system in accordance with some embodiments of the present invention.

FIG. 5 is a block diagram of a heading reference system in accordance with an example that can be used for performing the method of the present invention.

An AHRS system is commonly viewed as a triaxial sensor system that is capable of providing real-time orientation and direction information. As a result, such a system is required to be reliable, efficient and accurate. In order to calculate navigation related parameters, an AHRS system includes gyroscopes, accelerometers and magnetometers that are capable of sensing and measuring rotation, proper acceleration and magnetic field magnitude, respectively. For example, the use of magnetometers provides the necessary information for calculating the vehicle's heading as it relates to magnetic and/or true north heading. However, magnetic field measurements are susceptible to local magnetic disturbances. Specifically, the presence of ferrous materials (e.g., natural magnets) or electric magnets in the vicinity of the magnetometers can cause disturbances due to the generation and presence of additional magnetic fields. Importantly, such a hard iron effect can result in erroneous heading measurements from the AHRS and should be periodically adjusted in order to avoid dangerous conditions during operation of the vehicle.

Furthermore, additional disturbances may occur as a result of faulty installation procedures (e.g., mounting) of a separately mounted triaxial magnetometer. Specifically, the misalignment of the magnetometers from chosen axes can cause offset errors in the obtained measurements. In such cases, determining a misalignment angle for the magnetometers can provide the ability to calibrate the heading system to ensure that the obtained measurements are accurate.

Accordingly, systems and methods are provided for periodically calibrating and adjusting the heading system by determining calibration values for the magnetometers to account for hard iron disturbances and possible misalignments of the magnetometers, thereby enabling reliable and accurate heading measurements to be obtained from an AHRS or other heading system. The following describes embodiments of the present invention in more detail with reference to the accompanying figures.

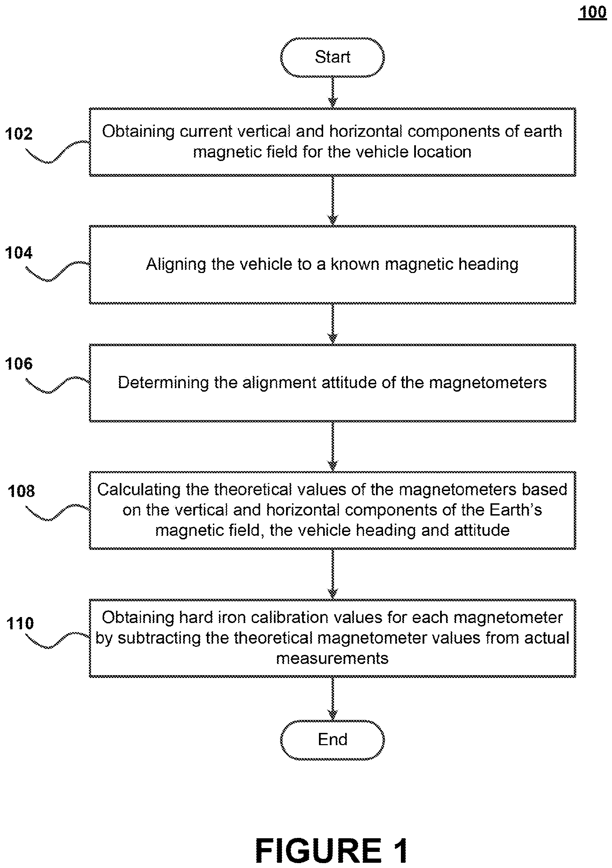

Initially referring to FIG. 1, a process flow diagram illustrates a method 100 for performing an initial calibration of a vehicle heading system containing one or more magnetometers. As illustrated by way of example in the flow diagram of FIG. 1, and as will be explained in greater detail hereinafter, the current vertical and horizontal components of the Earth's magnetic field for the particular location of the vehicle, such as an aircraft or a ship, are obtained. This is represented by block 102 in FIG. 1. The vehicle is positioned or aligned to a known magnetic heading, as represented by block 104 in FIG. 1. The alignment attitude of the magnetometers is then determined, as represented by block 106 in FIG. 1. The theoretical values of the magnetometers are then calculated based on the vertical and horizontal components of the Earth's magnetic field, the vehicle heading and vehicle attitude, as represented by block 108 in FIG. 1. The theoretical magnetometer values are then subtracted from the actual measurements to obtain hard iron calibration values for each magnetometer in the heading system, as represented by block 110 in FIG. 1.

Typically, for example, in an attitude heading and reference system, or AHRS, on board an aircraft, the magnetic heading and pitch angle calibration of the AHRS is a very time-consuming operation and is often limited to the geographic vicinity of the airport where the calibration was performed. That is not the case with method 100 of the present invention which may be used, for example, with triaxial magnetometers aligned to the x, y, and z planes, or with two-axis magnetometer arrangements. In either instance, a set of theoretical magnetic field properties of the Earth, such as the theoretical values for horizontal intensity and vertical intensity of the magnetic field, at the location of the positioned vehicle is obtained. The information for these theoretical values may preferably be obtained from a website, or any other suitable source and/or database that provides information relating to the Earth's magnetic field. An exemplary organization that provides access to geophysical data from which the theoretical valued can be derived is the National oceanic and Atmospheric Association (NOAA) which maintains a website associated with the National Geophysical Data Center (NGDC). For example, an aircraft whose conventional AHRS is being calibrated, would preferably be positioned in a magnetically clean and flat area heading magnetic North with its engines and avionics running. Preferably the conventional magnetic calibration page or interface of the AHRS would be accessed and the theoretical values obtained from such a website, including the total field as well as the horizontal and vertical intensity, would be entered on the magnetic calibration page or interface and, for example, North reading would be selected. To improve accuracy, this procedure can preferably be repeated for each of the other three normal magnetic headings, East, South, and West, by first positioning the vehicle to each of these headings, repeating the procedure, and selecting the corresponding reading for that heading. Such repositioning of the aircraft can provide a more accurate estimation of the aircraft's heading by accounting for variations in the aircraft's orientation (e.g., pitch and roll angles) resulting from possible anomalies due to the ground's surface.

In this regard, it should be noted that the normal magnetometer readings without the presence of any hard iron effects (e.g., the theoretical values of the magnetometers) are defined by the following equations for each of the four normal headings North, East, South and West:

(a) When heading North:

$$[xMag \quad yMag \quad zMag] = [HI \quad 0 \quad VI]\begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}$$

$$= [HI\cos\theta - VI\sin\theta \quad HI\sin\theta\sin\phi + VI\cos\theta\sin\phi \quad HI\sin\theta\cos\phi + VI\cos\theta\cos\phi]$$

(b) When heading East:

$$[xMag \quad yMag \quad zMag] = [0 \quad HI \quad VI]\begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}$$

$$= [-VI\sin\theta \quad HI\cos\phi + VI\cos\theta\sin\phi \quad -HI\sin\phi + VI\cos\theta\cos\phi]$$

(c) When heading South:

$$[xMag \quad yMag \quad zMag] = [-HI \quad 0 \quad VI]\begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}$$

$$= [-HI\cos\theta - VI\sin\theta \quad -HI\sin\theta\sin\phi + VI\cos\theta\sin\phi \quad -HI\sin\theta\sin\phi + VI\cos\theta\cos\phi]$$

(d) When heading West:

$$[xMag \quad yMag \quad zMag] = [0 \quad -HI \quad VI]\begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}$$

$$= [-VI\sin\theta \quad -HI\cos\phi + VI\cos\theta\sin\phi \quad -HI\sin\phi + VI\cos\theta\cos\phi]$$

Where:

HI Horizontal intensity of the local magnetic field;
VI Vertical intensity of the local magnetic field;
$\theta$ Aircraft pitch angle;
$\phi$ Aircraft bank angle;
$\psi$ Aircraft magnetic heading;
xMag x-axis theoretical magnetometer reading;
yMag y-axis theoretical magnetometer reading; and
zMag z-axis theoretical magnetometer reading.

The deviation of the magnetometer readings from the above values is referred to as the hard iron offset of the unit being calibrated and, in accordance with the provided method, will be subtracted from the magnetometer readings resulting in the following equation for the corrected heading:

$$\psi = \tan^{-1}\left(\frac{Y_s}{X_s}\right)$$

Where:

$$X_s = (X_b - X_{cal}) \cos\theta + (Y_b - Y_{cal}) \sin\theta \sin\phi + (Z_b - Z_{cal}) \sin\theta \cos\phi$$

$$Y_s = (Y_b - Y_{cal}) \cos\phi - (Z_b - Z_{cal}) \sin\phi$$

$$Z_s = (X_b - X_{cal}) \sin\theta - (Y_b - Y_{cal}) \cos\theta \sin\phi - (Z_b - Z_{cal}) \cos\theta \cos\phi$$

Where:

$X_b$ x-axis magnetometer reading;
$Y_b$ y-axis magnetometer reading;
$Z_b$ z-axis magnetometer reading;
$X_{cal} = X_b$ - *xMag* x-axis magnetometer calibration value;
$Y_{cal} = Y_b$ - *yMag* y-axis magnetometer calibration value; and
$Z_{cal} = Z_b$ - *zMag* z-axis magnetometer calibration value.

Thus, summarizing the above method for initially calibrating a heading system installed in a vehicle, actual readings are obtained from one or more magnetometers at one or more headings for the vehicle, such as preferably at the four different magnetic headings corresponding to North, South, East, and West, and a set of theoretical magnetic field properties of the Earth is also obtained at those same locations, such as from a web site containing this information. These theoretical values include values for the horizontal and vertical intensity of the magnetic field at each of these locations for the vehicle as well as the total field. A theoretical reading for the magnetometer at each of these headings is computed and then compared against the actual magnetometer readings at these same locations to obtain calibration values for the heading system. These calibration values are then utilized, such as by averaging all of the calibration values obtained, to provide a universal average gain and offset for the magnetometer, thus, universally calibrating the heading system with respect to measurement errors. In some embodiments, a universal average gain can be obtained by calculating a ratio of the average theoretical magnetometer reading and average actual magnetometer reading at the different magnetic headings and/or by obtaining multiple ratios associated with the different magnetic headings that can be averaged to provide an average universal gain. This calibration method is preferably performed with the engine and avionics of the aircraft running, or corresponding equipment on the vehicle running. If desired, these calibration values can be filtered through low pass filters to reduce any effects of noise.

Although the calibration method 100 can be accomplished at a single position of the vehicle, it has been found that the accuracy is preferably enhanced by doing it at the four normal directional headings of the compass; namely, North, South, East, and West.

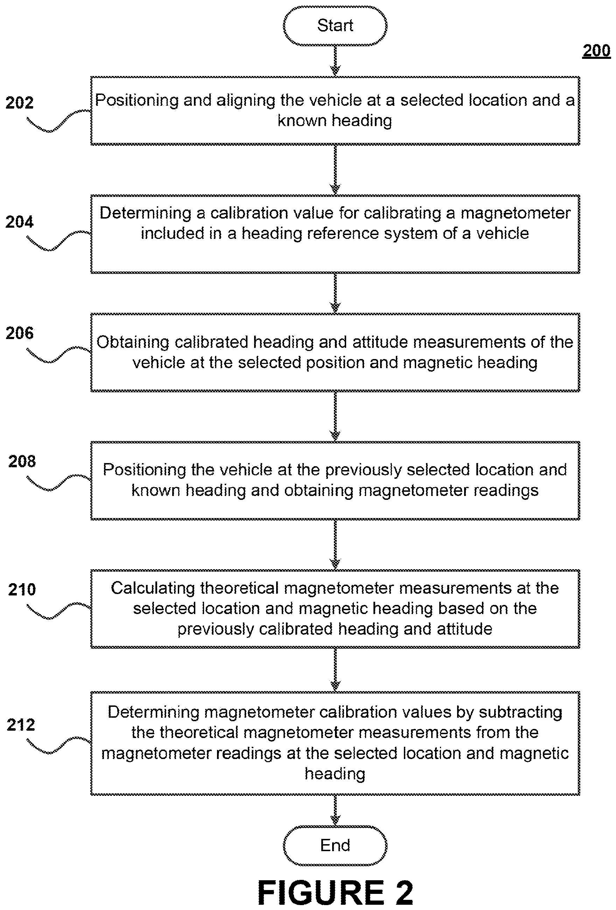

Referring now to FIG. 2, a process flow diagram illustrates an exemplary method 200 for calculating magnetometer calibration values (e.g., $X_{cal}$, $Y_{cal}$, $Z_{cal}$) and performing a re-calibration of the heading system in accordance with certain embodiments of the present invention. In some embodiments, an initial calibration of the AHRS is performed like the one illustrated, for example, in previously presented FIG. 1 in order to compensate for hard iron effects in the magnetometers. In order to perform an initial calibration, the vehicle is positioned at one or more selected locations and aligned to one or more known magnetic headings as shown at 202.

At 204, magnetometer calibration values are determined based on the employed calibration method. For example, such calibration values can be obtained by calculating the deviation between the magnetometer readings at one or multiple selected locations and magnetic headings and theoretical magnetometer measurements calculated for the same locations and magnetic headings. In some embodiments any suitable calibration method can be performed to obtain magnetometer calibration values. Upon obtaining the calibration values for the magnetometers, the AHRS can be calibrated to provide corrected heading and attitude measurements as shown at 206.

In some embodiments, it may be required to perform a re-calibration of the AHRS system to account for any additive hard iron presence in the vicinity of the magnetometers. For example, additional instruments with ferrous materials may be added in the cockpit of an aircraft necessitating an adjustment of the previous calibrated heading. In some embodiments, the previously computed magnetometer calibration values may need to be recomputed for additional processing purposes relating to the use of Inertial Measurement Units (IMU) in providing navigation measurements. This can be accomplished at 208 by positioning the vehicle at a single, previously selected location and known heading allowing for the calculation of the previously calibrated magnetometer readings using the known heading, pitch and roll angles and obtaining magnetometer readings.

At 210, theoretical magnetometer measurements can be computed by obtaining theoretical magnetic properties of the Earth corresponding to the previously known selected location and the previously obtained calibrated heading and attitude of the vehicle. At 212, the magnetometer calibration values are computed by subtracting the theoretical magnetometer measurements from the magnetometer readings obtained at 208 resulting in the following equations for the computed magnetometer calibration values.

$$X_{cal} = X_b - (VIsin\theta - HIcos\theta cos\psi)$$

$$Y_{cal} = Y_b - (HIsin\psi cos\phi - HIsin\phi cos\psi sin\theta - VIcos\theta sin\phi)$$

$$Z_{cal} = Z_b - (-HIsin\psi sin\phi - HIcos\phi cos\psi sin\theta - VIcos\theta cos\phi)$$

Where:

$X_b$ x-axis magnetometer reading;

$Y_b$ y-axis magnetometer reading;

$Z_b$ z-axis magnetometer reading;

$X_{cal}$ x-axis magnetometer calibration value;

$Y_{cal}$ y-axis magnetometer calibration value;

$Z_{cal}$ z-axis magnetometer calibration value;

$\psi$ known calibrated magnetic heading;

$\theta$ known calibrated pitch angle;

$\phi$ known calibrated roll angle;

HI Horizontal intensity of the magnetic field at known location; and

VI Vertical intensity of the magnetic field at known location.

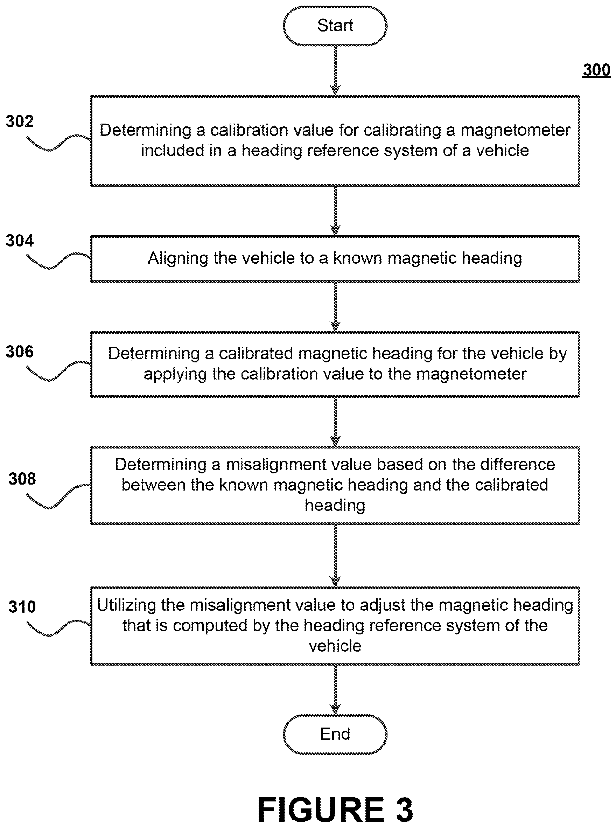

Referring now to FIG. 3, a process flow diagram illustrates an exemplary method 300 for determining and computing misalignment values for the one or more magnetometers in an AHRS system. In some embodiments, the installation (e.g., mounting) of one or more triaxial magnetometers may not be aligned correctly with the chosen vehicle axes. As a result, the magnetometers can exhibit a constant misalignment offset causing the AHRS system to provide erroneous heading measurements, which can affect the reliability and navigation of the vehicle. In such cases, method 300 can provide a solution by determining the presence of a magnetometer misalignment. Moreover, if such a determination is made during installation of the magnetometer on the vehicle (e.g., during a manufacturing testing phase) then the appropriate actions can be taken by either replacing and/or re-installing the triaxial magnetometer. Additionally, in some embodiments, such a determination may be made at a later time (e.g., after installation) to account for possible maintenance and/or repair issues of the vehicle. In such cases, the computed misalignment value for the magnetometer can be used to further calibrate the AHRS system in order to obtain corrected heading and attitude measurements.
Initially at 302, method 300 determines a calibration value for the magnetometers that are included in the AHRS system of a vehicle. In some embodiments, calibration values can be obtained using method 100 that was previously described in connection with FIG. 1. In some embodiments, the AHRS system may be readjusted and calibration values can be re-computed using method 200 described above in connection with FIG. 2.
At 304, the vehicle is aligned at a known magnetic heading. For example, in some embodiments the vehicle can be aligned to a common heading, such as any of North, South, East and West, or any other suitable heading. At 306, the calibrated magnetic heading of the vehicle can be determined by applying the magnetometer calibration values included in the AHRS system.
At 308, misalignment values for the magnetometers can be determined by comparing the obtained calibrated heading with the known magnetic heading. Specifically, the difference between the calibrated magnetic heading and the known heading can provide the misalignment value for the installed magnetometer with respect to the lateral and longitudinal axis of the vehicle.

In some embodiments, the misalignment value of the magnetometer can be utilized to adjust for deviations by further calibrating the AHRS system at 310. For example, the misalignment value of the magnetometer can be subtracted from the measured magnetometer values of the lateral and longitudinal axes. The misalignment value can also be used to adjust for deviations associated with other vehicle equipment as well.

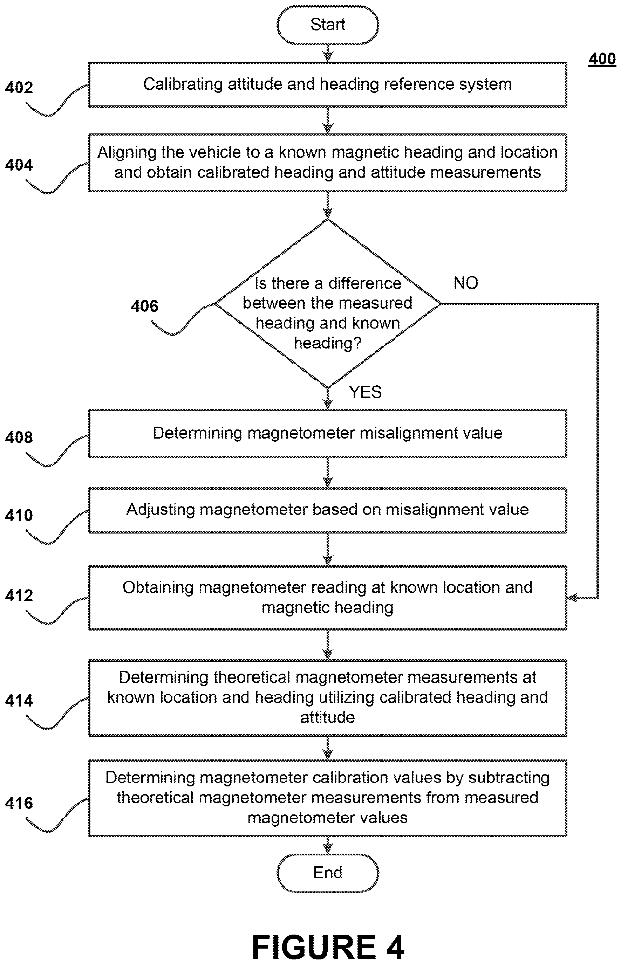

FIG. 4 is a process flow diagram illustrating an exemplary method 400 that adjusts for deviations relating to hard iron effects and installation misalignments in an AHRS system. Specifically, at 402 the vehicle's AHRS system is calibrated to obtain corrected heading and attitude measurements. In some embodiments, a calibration is achieved using the method described in connection with FIG. 1 or any other suitable calibration method. At 404, the vehicle is aligned at a known magnetic heading at a specific location and corrected heading and attitude measurements are obtained from the calibrated AHRS. For example, a specified location can be identified at an airport such that it provides magnetic markings and a flat surface in order to facilitate the maintenance of the aircraft.

At 406, the obtained heading measurement is compared to the known magnetic heading. If there is a difference between the heading measurement and known magnetic heading (e.g., "YES" at 406), then the measured difference represents the misalignment value of the magnetometer with respect to the lateral and longitudinal axes of the vehicle as shown at 408. Such magnetometer misalignment can occur during installation (e.g., mounting) of the magnetometer on the vehicle. Failing to account for the misalignment during calibration can result in erroneous AHRS heading measurements, which in turn can negatively affect the navigation of the vehicle and create dangerous conditions when the vehicle is in operation. Accordingly, at 410, the misalignment value can be subtracted from the magnetometer measurement to correct for installation defects and to compute corrected magnetometer readings at the known heading and location as shown at 412.

If there is no difference measured between the known magnetic heading and calibrated heading measurement obtained from the AHRS (e.g., "NO" at 406), then method 400 proceeds to 412 to obtain magnetometer readings at the known magnetic heading and location of the aircraft.

Moreover, at 414 the theoretical magnetometer measurements are computed based on the obtained calibrated heading, attitude (e.g., pitch angle, roll angle) and the properties of the Earth's magnetic field (e.g., horizontal and vertical intensity) at the known location.

At 416, the magnetometer calibration values are obtained by subtracting the theoretical magnetometer measurements from the obtained magnetometer measurements. In some embodiments, the magnetometer calibration values can be used to re-calibrate the AHRS system in the case that new hard iron disturbances are present and/or can be used as an estimate of previously computed magnetometer calibration values.

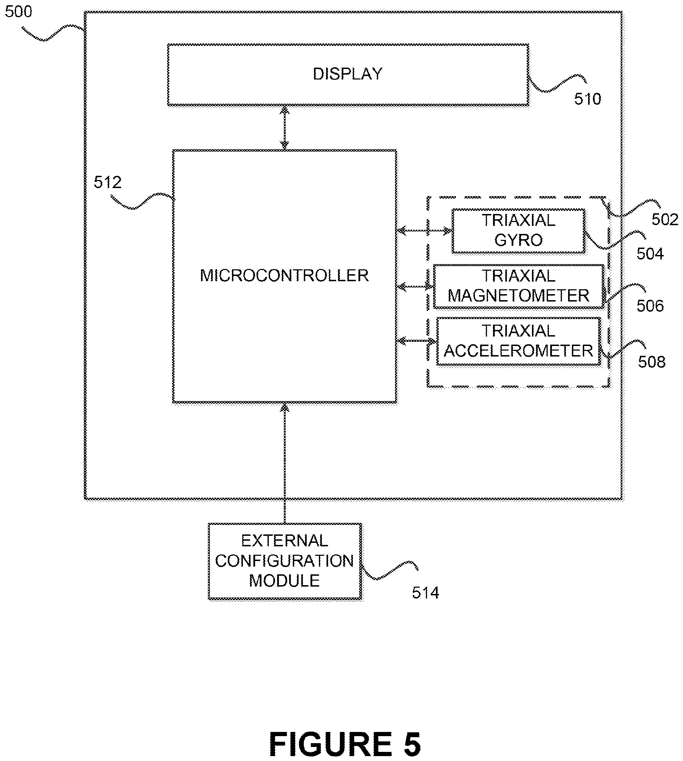

FIG. 5 is a block diagram illustrating an exemplary attitude and heading reference system 500 in accordance with some embodiments of the disclosed subject matter. The heading reference system 500 may be incorporated into an aircraft, maritime vessel or other vehicle. The heading reference system 500 may be configured to perform the methods disclosed in FIGS. 1-4 either independently or in conjunction with other components of the vehicle that includes the heading reference system 500.

As shown in FIG. 5, a heading and reference system 500 includes an inertial measurement unit 502 which includes triads of gyroscopes 504, magnetometers 506 and accelerometers 508. The calibration methods disclosed above may be being utilized in conjunction with the magnetometers 506 and accelerometers 508. As shown, attitude and heading reference system 500 may also include a display 510. The display 510 may include one or more liquid crystal displays (LCDs), light emitting diodes (LEDs), organic light emitting diodes (OLEDs) and/or any other suitable display components. Additionally, heading reference system 500 can include microcontroller 512 that receives external inputs from an external configuration module 514 (e.g., which may include the theoretical values and properties mentioned above and/or manual entries of additional parameters such as known and/or previously calibrated heading values) as well as internal inputs from any and/or all of the components of inertial measurement unit 502 (e.g., which may include data associated with the actual magnetic readings and any other related data). In some embodiments, system 500 can include a global positioning system (GPS) or other navigation sensors to provide additional navigation information (e.g., course of vehicle).

In some embodiments attitude and heading reference system 500 can be any suitable aircraft heading reference system, such as an integrated standby unit, a primary or secondary attitude and heading reference system, an air data and attitude heading reference system, or inertial navigation systems; as well as any suitable non-aircraft system such as a vehicle or inertial system that requires a source of heading.

System 500 is responsible for determining heading and attitude of a vehicle using magnetometers 506 and accelerometers 510. In some embodiments, such determination can be made while the vehicle is stationary (e.g., on the ground) and/or during normal operations of the vehicle (e.g. during aircraft flight). For example, in some embodiments, an aircraft can be positioned at a specified flat area within airport grounds that can include designated markings identifying known magnetic headings (e.g., resembling a compass rose) which can eliminate the need for obtaining multiple magnetic measurements in order to account for variations of the ground's surface. Microcontroller 512 can then determine calibration and/or re-calibration values for magnetometers 506 in order to provide a corrected heading and attitude of the vehicle in accordance with some embodiments of the disclosed subject matter. As a result, the attitude and heading reference system can be used for measurement, computation and display of critical navigation information such as, *inter alia,* pitch, roll, yaw, magnetic and true heading angles.

In some embodiments, system 500 may further include one or more non-transitory, physical storage devices (not shown) that can store any and all data associated with the heading system 500 including, but not limited to, any data associated with the internal and external inputs. The storage device may further store computer program instructions associated with any or all of the above activities that involve adjusting the heading system (or associated components) including any activities discussed above with reference to FIGS. 1-4. The microcontroller 512 may communicate with the storage device to access any of the stored data and/or to execute any of the stored instructions.

Those skilled in the art will recognize, based on the above disclosure and an understanding therefrom of the teachings of the invention, that the general structure and functionality provided by and incorporated therein, may vary in different embodiments of the invention. Accordingly, the particular systems and methods shown in FIG. 1 - FIG. 5 are for illustrative purposes to facilitate a full and complete understanding and appreciation of the various aspects and functionality of particular embodiments of the invention as realized in system and method embodiments thereof. Those skilled in the art will appreciate that the invention can be practiced in other than the described embodiments, which are presented for purposes of illustration and not limitation, and the present invention is limited only by the claims which follow.

**Claims**

1. A method for recalibrating an aircraft attitude and heading reference system (AHRS) comprising at least one magnetometer, the method comprising the steps of:

   performing an initial calibration of the AHRS, wherein wherein performing the initial calibration includes computing initial magnetometer calibration values to obtain an initial calibrated heading and attitude of an aircraft positioned at one or more selected locations along the Earth's surface and aligned to one or more known magnetic headings (202, 204, 206, 302);
   performing a recalibration of the AHRS, wherein performing the recalibration of the AHRS includes:

      selectively positioning the aircraft at a single one of the one or more previously selected locations along the Earth's surface at one of the one or more known magnetic headings (208, 304);
      obtaining magnetometer readings from the at least one magnetometer at the one known magnetic heading while the aircraft is stationary (208);
      computing theoretical magnetometer measurements for the at least one magnetometer at the one known magnetic heading based on obtained theoretical magnetic properties of the Earth corresponding to the location and the previously calibrated heading and attitude of the aircraft (210);
      calculating second magnetometer calibration values by subtracting the theoretical magnetometer measurements for the at least one magnetometer from the magnetometer readings (212); and
      utilizing the magnetometer calibration values to recalibrate the aircraft AHRS; and

   computing a misalignment value to further calibrate the AHRS, wherein computing the misalignment includes:

      applying the initial magnetometer calibration values or the second magnetometer calibration values to obtain a calibrated magnetic heading (306);
      determining the misalignment value for the at least one magnetometer by comparing the calibrated magnetic heading with the known magnetic heading (308); and
      utilizing the misalignment value to further calibrate the aircraft AHRS (310).

2. The method of claim 1 wherein the magnetometer calibration values for the at least one magnetometer are computed according to the following equations:

$$X_{cal} = X_b - (VI \sin \theta - HI \cos \theta \cos \psi);$$

$$Y_{cal} = Y_b - (HI \sin \psi \cos \varphi - HI \sin \varphi \cos \psi \sin \theta - VI \cos \theta \sin \varphi);$$

and

$$Z_{cal} = Z_b - (-HI \sin \psi \sin \varphi - HI \cos \varphi \cos \psi \sin \theta - VI \cos \theta \cos \varphi);$$

where:

$X_b$ is the x-axis magnetometer reading;
$Y_b$ is the y-axis magnetometer reading;
$Z_b$ is the z-axis magnetometer reading;
$\Psi$ is the calibrated heading;
$\theta$ is a calibrated pitch angle;
$\varphi$ is a calibrated roll angle;
HI is the horizontal intensity of the Earth's magnetic field at the previously selected location of the positioned aircraft; and
VI is the vertical intensity of the Earth's magnetic field at the previously selected location of the positioned aircraft.

**3.** The method of claim 1, wherein the magnetometer readings from the at least one magnetometer are obtained while an engine and avionics of the aircraft are running.

**Patentansprüche**

**1.** Verfahren zum Rekalibrieren eines Flugzeuglage- und -kursreferenzsystems (AHRS), das zumindest ein Magnetometer umfasst, wobei das Verfahren die folgenden Schritte umfasst:

Durchführen einer anfänglichen Kalibrierung des AHRS, wobei das Durchführen der anfänglichen Kalibrierung das Berechnen anfänglicher Magnetometerkalibrierungswerte umfasst, um einen anfänglich kalibrierten Kurs und eine anfänglich kalibrierte Lage eines Flugzeugs zu erhalten, das an einer oder mehreren ausgewählten Positionen entlang der Erdoberfläche positioniert ist und auf einen oder mehrere bekannte Magnetkurse (202, 204, 206, 302) ausgerichtet ist;
Durchführen einer Rekalibrierung des AHRS, wobei das Durchführen der Rekalibrierung des AHRS Folgendes umfasst:

selektives Positionieren des Flugzeugs in einer einzelnen aus der einen oder den mehreren zuvor ausgewählten Positionen entlang der Erdoberfläche an einem aus dem einen oder den mehreren bekannten Magnetkursen (208, 304);
Erhalten von Magnetometerablesungen von dem zumindest einen Magnetometer an dem einen bekannten Magnetkurs, während das Flugzeug stationär ist (208);
Berechnen der theoretischen Magnetometermessungen für das zumindest eine Magnetometer an dem einen bekannten Magnetkurs basierend auf erhaltenen theoretischen Magneteigenschaften der Erde, die der Position und dem zuvor kalibrierten Kurs und der zuvor kalibrierten Lage des Flugzeugs entsprechen (210);
Berechnen von zweiten Magnetometerkalibrierungswerten durch Subtrahieren der theoretischen Magnetometermessungen für das zumindest eine Magnetometer von den Magnetometerablesungen (212) und Verwenden der Magnetometerkalibrierungswerte, um das Flugzeug-AHRS zu rekalibrieren und

Berechnen eines Fehlausrichtungswerts, um das AHRS weiter zu kalibrieren, wobei das Berechnen der Fehlausrichtung Folgendes umfasst:

Anwenden der anfänglichen Magnetometerkalibrierungswerte oder der zweiten Magnetometerkalibrierungswerte, um einen kalibrierten Magnetkurs zu erhalten (306);
Bestimmen des Fehlausrichtungswerts für das zumindest eine Magnetometer durch Vergleichen des kalibrierten Magnetkurses mit dem bekannten Magnetkurs (308) und

Verwenden des Fehlausrichtungswerts, um das Flugzeug-AHRS weiter zu kalibrieren (310).

**2.** Verfahren nach Anspruch 1, wobei die Magnetometerkalibrierungswerte für das zumindest eine Magnetometer gemäß den folgenden Gleichungen berechnet werden:

$$X_{cal} = X_b - (VI \sin \theta - HI \cos \theta \cos \psi);$$

$$Y_{cal} = Y_b - (HI \sin \psi \cos \varphi - HI \sin \varphi \cos \psi \sin \theta - VI \cos \theta \sin \varphi);$$

und

$$Z_{cal} = Z_b - (-HI \sin \psi \sin \varphi - HI \cos \varphi \cos \psi \sin \theta - VI \cos \theta \cos \varphi);$$

worin:

$X_b$ die Magnetometer-x-Achsen-Ablesung ist;
$Y_b$ die Magnetometer-y-Achsen-Ablesung ist;
$Z_b$ die Magnetometer-z-Achsen-Ablesung ist;
$\Psi$ der kalibrierte Kurs ist;
$\theta$ ein kalibrierter Nickwinkel ist;
$\varphi$ ein kalibrierter Rollwinkel ist;
HI die horizontale Intensität des Magnetfelds der Erde an der zuvor ausgewählten Position des positionierten Flugzeugs ist und
VI die vertikale Intensität des Magnetfelds der Erde an der zuvor ausgewählten Position des positionierten Flugzeugs ist.

**3.** Verfahren nach Anspruch 1, wobei die Magnetometerablesungen von dem zumindest einen Magnetometer erhalten werden, während ein Antrieb und die Bordelektronik des Flugzeugs aktiviert sind.

**Revendications**

**1.** Procédé pour recalibrer un système de référence d'assiette et de cap d'aéronef (AHRS) comprenant au moins un magnétomètre, le procédé comprenant les étapes consistant à :

effectuer un premier calibrage de l'AHRS,
dans lequel l'exécution du calibrage initial comprend le calcul des valeurs de calibrage de magnétomètre initiale pour obtenir un cap et une attitude calibrés initiaux d'un aéronef positionné au niveau d'un ou plusieurs emplacements sélectionnés le long de la surface de la Terre et alignés sur un ou plusieurs caps magnétiques connus (202, 204, 206, 302) ;
effectuer un recalibrage de l'AHRS,
dans lequel l'exécution de recalibrage de l'AHRS comprend les étapes consistant à :

positionner sélectivement l'aéronef en un seul des un ou plusieurs emplacements précédemment sélectionnés le long de la surface de la Terre au niveau de l'un des un ou plusieurs caps magnétiques connus (208, 304) ;
obtenir des lectures de magnétomètre à partir du au moins un magnétomètre au niveau du cap magnétique connu pendant que l'aéronef est stationnaire (208) ;
calculer des mesures de magnétomètre théoriques pour le au moins un magnétomètre au niveau du cap magnétique connu sur la base de propriétés magnétiques théoriques obtenues de la Terre correspondant à l'emplacement et au cap et à l'assiette préalablement calibrés de l'aéronef (210) ;
calculer des secondes valeurs de calibrage de magnétomètre en soustrayant les mesures de magnétomètre théoriques pour le au moins un magnétomètre à partir des lectures de magnétomètre (212) ; et
utiliser les valeurs de calibrage de magnétomètre pour recalibrer l'AHRS d'aéronef ; et

calculer une valeur de désalignement pour calibrer davantage l'AHRS,
dans lequel le calcul du désalignement comprend les étapes consistant à :

appliquer les valeurs de calibrage de magnétomètre initial ou les secondes valeurs de calibrage de magnétomètre pour obtenir un cap magnétique calibré (306) ;
déterminer la valeur de désalignement pour le au moins un magnétomètre en comparant le cap magnétique calibré avec le cap magnétique connu (308) ; et
utiliser la valeur de désalignement pour calibrer davantage l'AHRS d'aéronef (310).

2. Procédé selon la revendication 1, dans lequel les valeurs de calibrage de magnétomètre pour le au moins un magnétomètre sont calculées selon les équations suivantes :

$$X_{cal} = X_b \ (VI \ \sin \ \theta - HI \ \cos \ \theta \ \cos \ \Psi) \ ;$$

$$Y_{cal} = Y_b \ (HI \ \sin \ \Psi \ \cos \ \varphi - HI \ \sin \ \varphi \ \cos \ \Psi \ \sin \ \theta - VI \ \cos \ \theta \ \sin \ \varphi) \ ;$$

et

$$Z_{cal} = Z_b \ (-HI \ \sin \ \Psi \ \sin \ \varphi - HI \ \cos \ \varphi \ \cos \ \Psi \ \sin \ \theta - VI \ \cos \ \theta \ \cos \ \varphi) \ ;$$

dans lequel :

$X_b$ est la lecture de magnétomètre d'axe x ;
$Y_b$ est la lecture de magnétomètre d'axe y ;
$Z_b$ est la lecture de magnétomètre d'axe z ;
$\Psi$ est le cap calibré ;
$\theta$ est un angle de pas calibré ;
$\varphi$ est un angle de roulis calibré ;
HI est l'intensité horizontale du champ magnétique terrestre au niveau de l'emplacement précédemment sélectionné de l'aéronef positionné ; et
VI est l'intensité verticale du champ magnétique terrestre au niveau de l'emplacement précédemment sélectionné de l'aéronef positionné.

3. Procédé selon la revendication 1, dans lequel les lectures de magnétomètre provenant du au moins un magnétomètre sont obtenues pendant qu'un moteur et l'avionique de l'aéronef fonctionnent.

<u>100</u>

```
                    ┌──────────┐
                    │  Start   │
                    └──────────┘
                          │
                          ▼
┌─────────────────────────────────────────────────────┐
│ Obtaining current vertical and horizontal components │
102 │ of earth magnetic field for the vehicle location │
└─────────────────────────────────────────────────────┘
                          │
                          ▼
┌─────────────────────────────────────────────────────┐
104 │     Aligning the vehicle to a known magnetic heading │
└─────────────────────────────────────────────────────┘
                          │
                          ▼
┌─────────────────────────────────────────────────────┐
106 │   Determining the alignment attitude of the magnetometers │
└─────────────────────────────────────────────────────┘
                          │
                          ▼
┌─────────────────────────────────────────────────────┐
108 │ Calculating the theoretical values of the magnetometers based │
│     on the vertical and horizontal components of the Earth's │
│           magnetic field, the vehicle heading and attitude │
└─────────────────────────────────────────────────────┘
                          │
                          ▼
┌─────────────────────────────────────────────────────┐
110 │ Obtaining hard iron calibration values for each magnetometer │
│ by subtracting the theoretical magnetometer values from actual │
│                      measurements │
└─────────────────────────────────────────────────────┘
                          │
                          ▼
                    ┌──────────┐
                    │   End    │
                    └──────────┘
```

102   Obtaining current vertical and horizontal components of earth magnetic field for the vehicle location

104   Aligning the vehicle to a known magnetic heading

106   Determining the alignment attitude of the magnetometers

108   Calculating the theoretical values of the magnetometers based on the vertical and horizontal components of the Earth's magnetic field, the vehicle heading and attitude

110   Obtaining hard iron calibration values for each magnetometer by subtracting the theoretical magnetometer values from actual measurements

# FIGURE 1

**FIGURE 2**

**FIGURE 3**

Start

**400**

402 — Calibrating attitude and heading reference system

404 — Aligning the vehicle to a known magnetic heading and location and obtain calibrated heading and attitude measurements

406 — Is there a difference between the measured heading and known heading?

NO

YES

408 — Determining magnetometer misalignment value

410 — Adjusting magnetometer based on misalignment value

412 — Obtaining magnetometer reading at known location and magnetic heading

414 — Determining theoretical magnetometer measurements at known location and heading utilizing calibrated heading and attitude

416 — Determining magnetometer calibration values by subtracting theoretical magnetometer measurements from measured magnetometer values

End

# FIGURE 4

**FIGURE 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7587277 B
- US 8061049 B
- US 7891103 B
- US 7146740 B
- US 6860023 B
- US 9157747 B
- US 2015019159 A